(19) Europäisches Patentamt
European Patent Office
Office européen des brevets

(11) EP 4 660 937 A1

(12) EUROPEAN PATENT APPLICATION
published in accordance with Art. 153(4) EPC

(43) Date of publication:
10.12.2025 Bulletin 2025/50

(51) International Patent Classification (IPC):
$G06T\ 7/00^{(2017.01)}$    $G06N\ 3/0455^{(2023.01)}$

(21) Application number: 23919968.0

(52) Cooperative Patent Classification (CPC):
G06N 3/0455; G06T 7/00

(22) Date of filing: 20.12.2023

(86) International application number:
PCT/JP2023/045641

(87) International publication number:
WO 2024/161833 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.01.2023 JP 2023012832

(71) Applicant: FUJITSU LIMITED
Kawasaki-shi, Kanagawa 211-8588 (JP)

(72) Inventors:
• YAMAZAKI, Kimihiro
Kawasaki-shi, Kanagawa 211-8588 (JP)

• NAKAGAWA, Akira
Kawasaki-shi, Kanagawa 211-8588 (JP)
• WADA, Yuichiro
Kawasaki-shi, Kanagawa 211-8588 (JP)
• WADA, Mutsuyo
Kawasaki-shi, Kanagawa 211-8588 (JP)
• KATOH, Takashi
Kawasaki-shi, Kanagawa 211-8588 (JP)

(74) Representative: Hoffmann Eitle
Patent- und Rechtsanwälte PartmbB
Arabellastraße 30
81925 München (DE)

(54) MACHINE LEARNING PROGRAM, OPTIMIZATION PROGRAM, MACHINE LEARNING METHOD, OPTIMIZATION METHOD, AND INFORMATION PROCESSING DEVICE

(57) Machine learning using a frequency image is accurately executed. An information processing apparatus (100) acquires a second frequency image by inputting output of an encoder, which has input a first frequency image, to a decoder. The information processing apparatus (100) trains the encoder and the decoder based on a loss function, the first frequency image, and the second frequency image. In the loss function, a weight related to a first frequency is smaller than a weight related to a second frequency higher than the first frequency.

FIG.1

FUNCTIONAL BLOCK DIAGRAM ILLUSTRATING CONFIGURATION OF
INFORMATION PROCESSING APPARATUS ACCORDING TO EMBODIMENT

EP 4 660 937 A1

## Description

Technical Field

The present invention relates to a machine learning technique using a frequency image.

Background Art

There is a demand for estimating a three-dimensional density structure, which is difficult to be observed, based on projection images obtained by projecting the three-dimensional density structure in various angles. For example, a conventional technique has been used in which a three-dimensional density structure is estimated from projection images by using an auto-encoder type neural network.

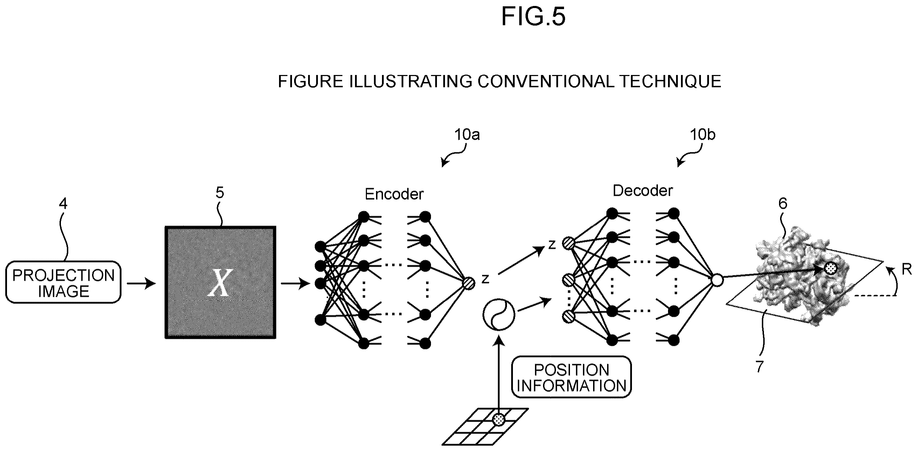

FIG. 5 illustrates the conventional technique. As illustrated in FIG. 5, the auto-encoder type neural network includes an encoder 10a and a decoder 10b. Here, a device that executes processing of the conventional technique is referred to as a "conventional device".

The conventional device generates a two-dimensional frequency image 5 by executing Fourier transform on a projection image 4 obtained by projecting a certain three-dimensional density structure in a certain projection direction R. The certain three-dimensional density structure includes a density structure of a protein. The conventional device acquires an output result z by inputting the frequency image 5 to the encoder 10a. The conventional device estimates a three-dimensional density structure 6 in Fourier space by inputting, to the decoder 10b, position information on the projection direction R in a case where the projection image 4 is projected and the output result z. The three-dimensional density structure in the real space is obtained by executing inverse Fourier transform on the three-dimensional density structure 6.

Here, the conventional device executes machine learning on the encoder 10a and the decoder 10b based on an evaluation function based on the difference (error) between the frequency image 5 and an estimated frequency image 7. The estimated frequency image 7 is obtained by projecting the three-dimensional density structure 6 in the projection direction R. For example, Expression (1) indicates an evaluation function L used by the conventional device.

$$\mathcal{L}(X; \xi, \theta) = E_{q_\xi(z|X)}[\log p(X|z)] - \beta KL\big(q_\xi(z|X)\big\|p(z)\big) \qquad \cdots (1)$$

"X" in Expression (1) is a value corresponding to frequency coordinates of the frequency image 5. "$\xi$" and "$\theta$" correspond to parameters of the encoder 10a and the decoder 10b, respectively. The first term on the right side of Expression (1) is a term of an expected value E for evaluating the difference between the frequency image 5 and the estimated frequency image 7. The second term on the right side of Expression (1) is defined by KL divergence, and has a value that decreases as the distribution of $q_\xi(z|X)$ comes closer to the distribution of $p(z)$. Note that $q_\xi(z|X)$ approximates $p(z|X)$. Here, $p(z)$ follows a normal distribution of $N(0, I)$. In addition, $I$ is a unit matrix.

The conventional device executes machine learning of the encoder 10a and the decoder 10b so as to minimize the value of the evaluation function L in Expression (1).

Citation List

Patent Literature

Non Patent Literature 1: Ellen D. Zhong, et al. RECONSTRUCTING CONTINUOUS DISTRIBUTIONS OF 3D PROTEIN STRUCTURE FROM CRYO-EM IMAGES, arXiv: 1909.05215v3 [q-bio.QM] 15 Feb 2020

Summary of invention

Technical Problem

As described above, when executing machine learning, the conventional device uses the evaluation function L in Expression (1). For example, the conventional device evaluates the difference between a projection image of an actual protein and a projection image of an estimated three-dimensional density structure as the difference between the three-dimensional structures. A difference between two-dimensional frequency images is, however, not equivalent to a difference between three-dimensional density structures. Therefore, there is such a problem that the accuracy of estimating the three-dimensional density structure is influenced if machine learning is executed on the encoder 10a and the decoder 10b as in the conventional technique.

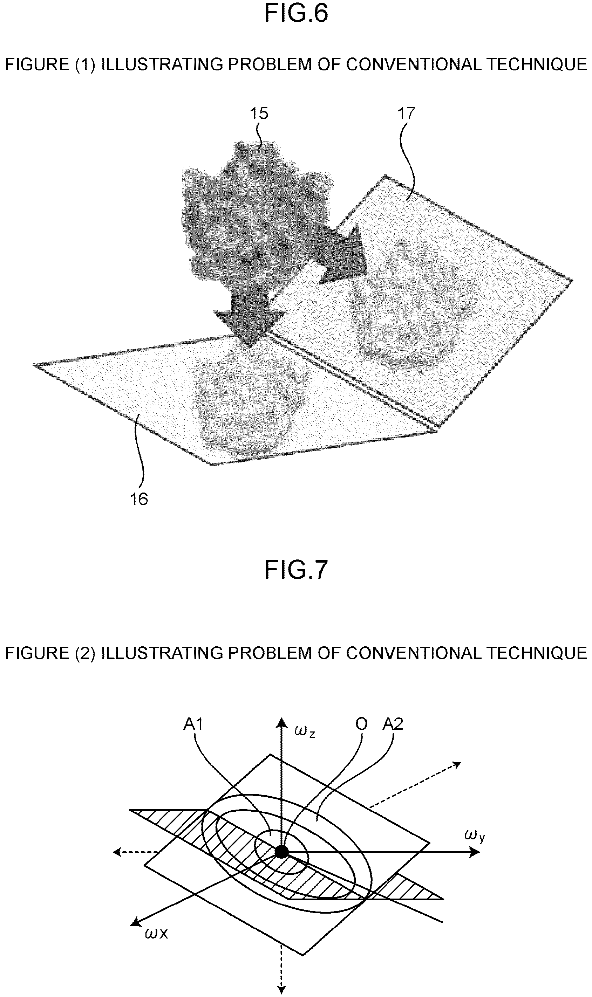

FIG. 6 is a figure (1) illustrating a problem of the conventional technique. For example, two-dimensional projection images obtained by projecting a certain three-dimensional density structure 15 in random projection directions are defined as projection images 16 and 17. FIG. 7 is obtained by executing Fourier transform on the projection images 16 and 17 and mapping the results of the Fourier transform in three-dimensional frequency space.

FIG. 7 is a figure (2) illustrating the problem of the conventional technique. In the three-dimensional frequency space, a frequency increases as the distance R from the origin 0 of the frequency increases. In the three-dimensional frequency space, an x component is defined as $\omega_x$. A y component is defined as $\omega_y$. A z component is defined as $\omega_z$. The distance R from the origin 0 in the three-dimensional frequency space is defined in Expression (2).

$$R = \sqrt{\omega_x^2 + \omega_y^2 + \omega_z^2} \qquad \cdots (2)$$

For example, the distance R of the area A1 is smaller than the distance R of the area A2. Therefore, the frequency of the area A1 is smaller than the frequency of the area A2.

Here, a frequency at the distance R is weighted with a weight of "$1/R^2$" in accordance with the distance. This means that a value of a frequency at a smaller distance R is more weighted at a ratio of "$1/R^2$" and the frequency is evaluated.

For example, when the difference between the frequency image 5 and the estimated frequency image 7 is calculated as it is as in the conventional technique, the difference is calculated with a weight on a value of a frequency included in the area A1 rather than on a value of a frequency included in the area A2. This is equivalent to comparing results of blurring a detailed structure of the three-dimensional density structure by using a low-pass filter with each other.

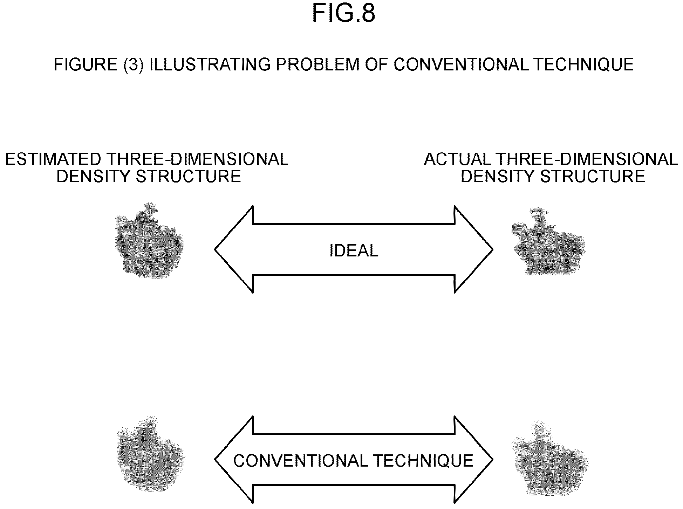

FIG. 8 is a figure (3) illustrating the problem of the conventional technique. As described above, in the conventional technique, results of blurring an estimated three-dimensional density structure and an actual three-dimensional density structure are compared with each other to calculate the difference therebetween, and the accuracy of estimating the three-dimensional density structure is deteriorated. Ideally, the difference between the estimated three-dimensional density structure and the actual three-dimensional density structure is desirably evaluated uniformly regardless of the frequency of a frequency image.

In one aspect, an object of the present invention is to provide a machine learning program, an optimization program, a machine learning method, an optimization method, and an information processing apparatus capable of accurately executing machine learning using a frequency image.

Solution to Problem

According to an aspect of an embodiment, a computer performs the following processes. The computer acquires a second frequency image by inputting output of an encoder that has input a first frequency image to a decoder, and trains the encoder and the decoder based on a loss function in which a weight related to a first frequency is smaller than a weight related to a second frequency higher than the first frequency, the first frequency image, and the second frequency image.

Advantageous Effects of Invention

Machine learning using a frequency image can be accurately executed.

Brief Description of Drawings

FIG. 1 is a functional block diagram illustrating a configuration of an information processing apparatus according to an embodiment.

FIG. 2 is a flowchart illustrating a processing procedure of the information processing apparatus according to the embodiment.

FIG. 3 illustrates an example of optimization of a three-dimensional density structure.

FIG. 4 illustrates an example of a hardware configuration of a computer that implements functions similar to those of the information processing apparatus of the embodiment.

FIG. 5 illustrates a conventional technique.

FIG. 6 is a figure (1) illustrating a problem of the conventional technique.

FIG. 7 is a figure (2) illustrating the problem of the conventional technique.

FIG. 8 is a figure (3) illustrating the problem of the conventional technique.

Description of Embodiments

An embodiment of a machine learning program, an optimization program, a machine learning method, an optimization method, and an information processing apparatus disclosed in the present application will be described in detail below with reference to the drawings. Note that the embodiment does not limit the invention. Embodiment

An information processing apparatus according to the embodiment inputs a first frequency image to an auto-encoder type neural network, and acquires a second frequency image. The information processing apparatus evaluates the difference between the first frequency image and the second frequency image, and executes machine learning of the auto-encoder type neural network. The first frequency image is an input image in CryoEM, and is the frequency image 5 or the like described with reference to FIG. 5. The second frequency image is an estimation image in CryoEM, and is the estimated frequency image 6 or the like described with reference to FIG. 5. The auto-encoder type neural network includes the encoder 10a and the decoder 10b.

As described with reference to FIG. 7, the frequency at the distance R is weighted with a weight of "$1/R^2$" in accordance with the distance. A value of a frequency at a smaller distance R is more weighted at a ratio of "$1/R^2$". When the difference between the first frequency image and the second frequency image is calculated as it is, the difference (error) is calculated with a weight on a value of a low frequency rather than a value of a high frequency. For example, the difference is calculated with a weight on a value of a frequency included in the area A1 rather than on a value of a frequency included in the area A2. In the following description, the coordinates of a frequency image, which are the coordinates of two-dimensional Fourier transform, are referred to as "frequency coordinates".

Here, in order to uniformly evaluate the difference between the first frequency image and the second frequency image regardless of the frequencies (frequency coordinates) of the frequency images, the information processing apparatus multiplies the differences (square errors) between the frequency coordinates at the distance R by $R^2$, and cumulatively adds the results. The distance R is defined by Expression (2). Since the frequency images are two-dimensional images, "$\omega_z$" has a value of 0.

For example, when the difference between the first frequency image and the second frequency image is evaluated, the information processing apparatus sets (u', v') as frequency coordinates of two-dimensional Fourier transform, calculates a difference of the Fourier transform at the frequency coordinates (u', v') from the first frequency image and the second frequency image, and sets the difference as $P_{\theta,\phi}$(u', v'). The information processing apparatus calculates an estimation error by using an evaluation function in Expression (3) using a correction filter coefficient F(u', v') defined for each of frequency coordinates. When calculating the estimation error, the information processing apparatus uses "$u'^2 + v'^2$" as the correction filter coefficient F(u', v'). The "$u'^2 + v'^2$" corresponds to "$R^2$".

$$\sum_{u',v'} P_{\theta,\phi}\left(u',v'\right)^2 F(u',v') \qquad \cdots (3)$$

Here, a distance $r_1$ between frequency coordinates (u'$_1$, v'$_1$) and the origin on a frequency image is defined as in Expression (4). A distance $r_2$ between frequency coordinates (u'$_2$, v'$_2$) and the origin on the frequency image is defined as in Expression (5).

$$r_1 = \sqrt{{u'_1}^2 + {v'_1}^2} \qquad \cdots (4)$$

$$r_2 = \sqrt{{u'_2}^2 + {v'_2}^2} \qquad \cdots (5)$$

When both the distance $r_1$ and the distance $r_2$ are between specific frequency bands $C_1$ and $C_2$ and the relation of $C_1 \leq r_1 < r_2 \leq C_2$ is satisfied, the information processing apparatus calculates the estimation error by using the evaluation function in Expression (3) on condition that there is at least one or more combinations of the frequency coordinates (u'$_1$, v'$_1$) and the frequency coordinates (u'$_2$, v'$_2$), which satisfy the relation in Expression (6).

$$|F(u'_1, v'_1)| < |F(u'_2, v'_2)| \qquad \cdots (6)$$

The reason why both the distance $r_1$ and the distance $r_2$ are limited between the specific frequency bands $C_1$ and $C_2$ as described above is to prevent an error of a high frequency component from having too large an influence since the high frequency component generally contains a large error.

The information processing apparatus executes machine learning on the auto-encoder type neural network so as to reduce an estimation error calculated by the evaluation function.

As described above, the information processing apparatus according to the embodiment inputs the first frequency image to the auto-encoder type neural network, and acquires the second frequency image. When evaluating the difference between the first frequency image and the second frequency image, the information processing apparatus calculates the estimation error by using the evaluation function in Expression (3). In the evaluation function, a weight related to a first frequency is smaller than a weight related to a second frequency (frequency higher than first frequency). This enables the difference between the first frequency image and the second frequency image to be uniformly evaluated regardless of the frequency (frequency coordinates) of a frequency image, and enables machine learning using the frequency image to be accurately executed.

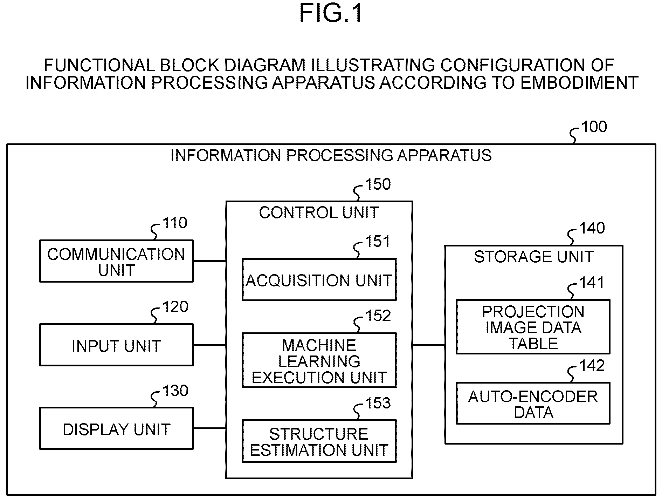

Next, a configuration example of the information processing apparatus that executes the above-described processing will be described. FIG. 1 is a functional block diagram illustrating a configuration of the information processing apparatus according to the embodiment. As illustrated in FIG. 1, an information processing apparatus 100 includes a communication unit 110, an input unit 120, a display unit 130, a storage unit 140, and a control unit 150.

The communication unit 110 executes data communication with an external device or the like via a network. For example, the communication unit 110 receives data of a projection image data table 141 from the external device or the like.

A user operates the input unit 120 when various types of information are input to the control unit 150 of the information processing apparatus 100.

The display unit 130 displays information output from the control unit 150.

The storage unit 140 includes the projection image data table 141 and auto-encoder data 142. The storage unit 140 may have other information.

The projection image data table 141 holds data of a plurality of projection images. For example, projection images of the projection image data table 141 are two-dimensional images obtained by projecting an actual protein (three-dimensional density structure) in certain projection directions $\theta$ and $\phi$. The projection image data table 141 may hold a projection image in association with information on a projection direction set in a case where the projection image is generated.

The auto-encoder data 142 relates to an auto-encoder type neural network. For example, the auto-encoder type neural network corresponds to the auto-encoder type neural network in FIG. 5, and includes the encoder 10a and the decoder 10b.

The control unit 150 includes an acquisition unit 151, a machine learning execution unit 152, and a structure estimation unit 153.

The acquisition unit 151 acquires data of the projection image data table 141 from an external device or the like via the communication unit 110. The acquisition unit 151 registers the acquired projection image data table 141 in the storage unit 140. The acquisition unit 151 may acquire data on a projection direction or a projection image from the input unit 120.

The machine learning execution unit 152 reads the auto-encoder data 142, executes the auto-encoder type neural network, and executes machine learning on the auto-encoder type neural network. The auto-encoder type neural network includes the encoder 10a and the decoder 10b. An example of processing of the machine learning execution unit 152 will be described below.

The machine learning execution unit 152 acquires a projection image and a projection direction from the projection image data table 141. The machine learning execution unit 152 generates the first frequency image by executing Fourier transform on the acquired projection image. The machine learning execution unit 152 inputs the first frequency image to the encoder 10a, and acquires the output result z from the encoder 10a. The machine learning execution unit 152 acquires an estimation result of the three-dimensional density structure in Fourier space from the decoder 10b by inputting the output result z and information on the projection direction to the decoder 10b.

The machine learning execution unit 152 acquires the second frequency image by projecting the three-dimensional density structure of the estimation result in a predetermined projection direction. For example, the predetermined projection direction corresponds to the projection image acquired from the projection image data table 141.

The machine learning execution unit 152 obtains an estimation error by cumulatively adds differences between values of frequency coordinates of the first frequency image and values of frequency coordinates of the second frequency image based on the evaluation function in Expression (3). The machine learning execution unit 152 executes machine learning on the auto-encoder type neural network so as to reduce the estimation error. For example, the machine learning execution unit 152 updates parameters of the encoder 10a and the decoder 10b of the auto-encoder type neural network based on an error backpropagation training method.

The machine learning execution unit 152 trains the auto-encoder type neural network by repeatedly executing the above-described processing based on the projection images stored in the projection image data table 141.

Incidentally, although using "$u'^2, v'^2$" as the correction filter coefficient $F(u', v')$ in a case where an estimation error is calculated, the machine learning execution unit 152 may use a value proportional to "$u'^2, v'^2$" instead of "$u'^2, v'^2$".

Furthermore, although, when calculating the estimation error, the machine learning execution unit 152 multiplies all the frequency coordinates on the frequency images (first and second frequency images) by the correction filter coefficient, this is not a limitation. When the sum "$u'_2{}^2 + v'_2{}^2$" of the squares of values set in the certain frequency coordinates ($u'_2$, $v'_2$) of the frequency image is equal to or less than a threshold, the machine learning execution unit 152 uses a value proportional to "$u'_2{}^2 + v'_2{}^2$" as the correction filter coefficient $F(u', v')$. In contrast, when the sum "$u'_2{}^2 + v'_2{}^2$" of the squares of values set in the certain frequency coordinates ($u'_2$, $v'_2$) of the frequency image is not equal to or less than the threshold, the machine learning execution unit 152 uses "0" as the correction filter coefficient $F(u', v')$.

Since, in the conventional technique, the correction filter coefficient $F(u', v') = 1$ holds regardless of the distance r from the origin to the frequency coordinates ($u'$, $v'$) of the frequency image, a high frequency is greatly cut in a high frequency component having a large r, which leads to a low contribution to a difference between high frequencies. Therefore, the machine learning execution unit 152 introduces a certain positive number $\delta$, and sets the correction filter coefficient $F(u', v')$ such that $O(F(u', v')) \geq o(r^\delta)$ holds.

Note that the machine learning execution unit 152 may calculate the estimation error by using an evaluation function in Expression (7) using a parameter $\sigma$ for controlling the weight of each frequency of the correction filter coefficient $F(u', v')$. $H(u, v)$ in Expression (7) is represented by Expression (8), and represents Fourier transform of a Gaussian filter with variance $\sigma^2$ to the frequency image.

$$\sum_{u',v'} P_{\theta,\phi}\,(u',v')^2 H(u,v)^2 (u'^2 + v'^2) \qquad \cdots (7)$$

$$H(u,v) = \frac{\sigma^2}{2\pi} exp\left(-\frac{u^2 + v^2}{2(1/\sigma^2)}\right) \qquad \cdots (8)$$

The structure estimation unit 153 estimates the three-dimensional density structure based on the auto-encoder type neural network trained by the machine learning execution unit 152.

For example, the structure estimation unit 153 acquires a target projection image from the input unit 120 or the like. The structure estimation unit 153 generates a frequency image by performing Fourier transform on the projection image.

The structure estimation unit 153 inputs the frequency image to the trained auto-encoder type neural network, and estimates the three-dimensional density structure in the Fourier space. The structure estimation unit 153 estimates the three-dimensional density structure in real space by executing inverse Fourier transform on the three-dimensional density structure in the Fourier space. The structure estimation unit 153 outputs the estimation result to the display unit 130, and displays the estimation result on the display unit 130.

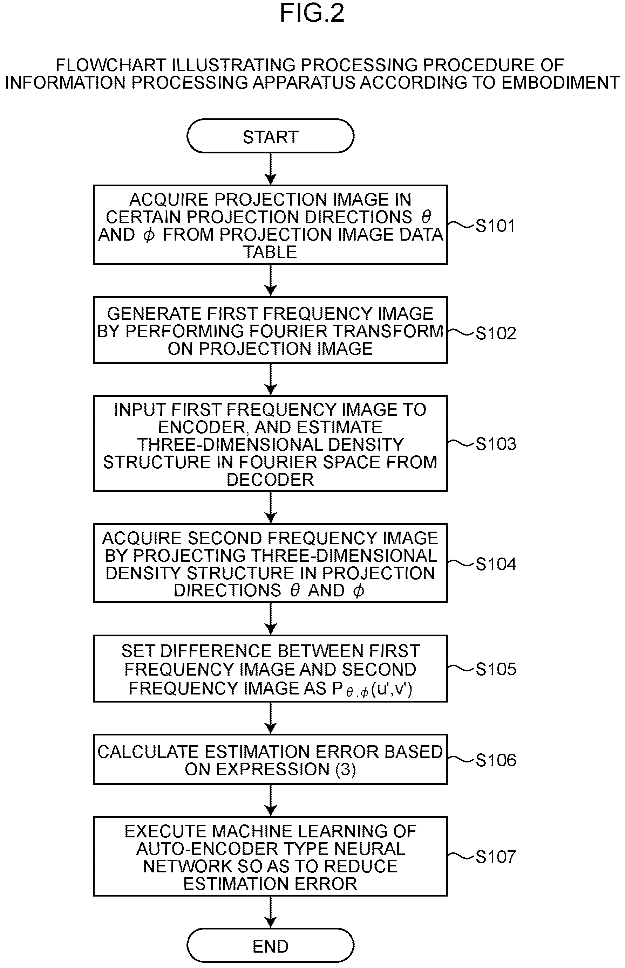

Next, a procedure of processing in which the information processing apparatus 100 according to the embodiment executes machine learning of the auto-encoder type neural network will be described. FIG. 2 is a flowchart illustrating a processing procedure of the information processing apparatus according to the embodiment. The machine learning execution unit 152 of the information processing apparatus 100 acquires a projection image in the certain projection directions $\theta$ and $\phi$ from the projection image data table 141 (Step S101).

The machine learning execution unit 152 generates the first frequency image by performing Fourier transform on the projection image (Step S102). The machine learning execution unit 152 inputs the first frequency image to the encoder 10a, and estimates the three-dimensional density structure in the Fourier space from the decoder 10b (Step S103).

The machine learning execution unit 152 acquires the second frequency image by projecting the three-dimensional density structure in the projection directions $\theta$ and $\phi$ (Step S104). The machine learning execution unit 152 sets the difference between the first frequency image and the second frequency image at frequency coordinates as "$P_{\theta,\phi}(u', v')$" (Step S105).

The machine learning execution unit 152 calculates the estimation error based on Expression (3) (Step S106). The machine learning execution unit 152 executes machine learning of the auto-encoder type neural network so as to reduce the estimation error (Step S107).

Next, effects of the embodiment will be described. The information processing apparatus 100 inputs the first frequency image to the auto-encoder type neural network, and acquires the second frequency image. When evaluating the difference between the first frequency image and the second frequency image, the information processing apparatus 100 calculates the estimation error by using the evaluation function in Expression (3). In the evaluation function, a weight related to a first frequency is smaller than a weight related to a second frequency (frequency higher than first frequency). This enables the difference between the first frequency image and the second frequency image to be uniformly evaluated regardless of the frequency (frequency coordinates) of a frequency image, and enables machine learning using the frequency image to be accurately executed.

When the sum "$u'_2{}^2 + v'_2{}^2$" of the squares of values set in the certain frequency coordinates ($u'_2$, $v'_2$) of the frequency image is equal to or less than a threshold, the information processing apparatus 100 uses a value proportional to "$u'_2{}^2 + v'_2{}^2$" as the correction filter coefficient $F(u', v')$. In contrast, when the sum "$u'_2{}^2 + v'_2{}^2$" of the squares of values set in the certain frequency coordinates ($u'_2$, $v'_2$) of the frequency image is not equal to or less than the threshold, the information processing apparatus 100 uses "0" as the correction filter coefficient $F(u', v')$. This can inhibit the contribution of a high frequency having a larger influence of noise than a low frequency from being excessively increased.

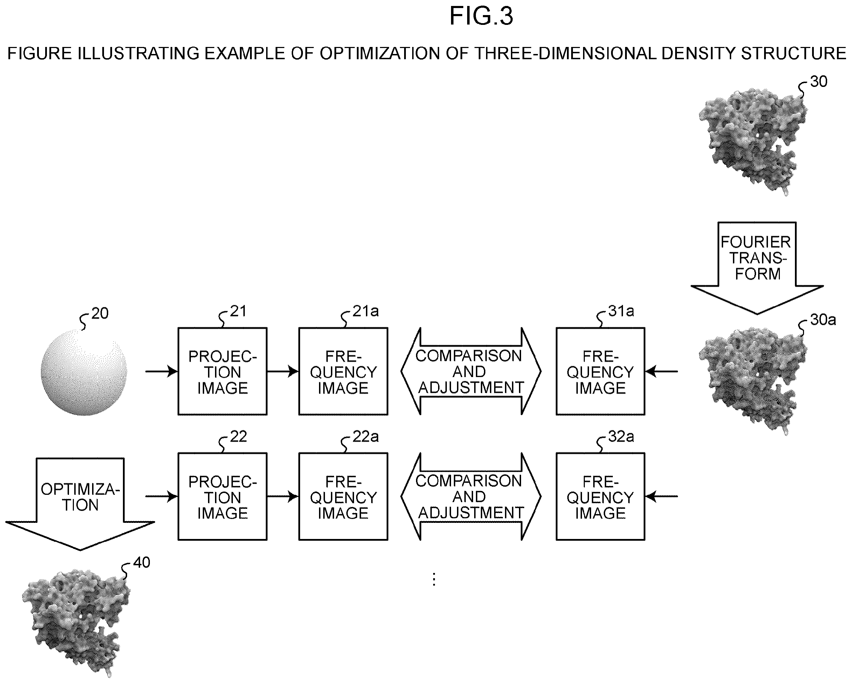

Incidentally, the above-described information processing apparatus 100 can also apply the above-described idea to optimization of the three-dimensional density structure. FIG. 3 illustrates an example of optimization of the three-dimensional density structure.

A case where a three-dimensional density structure 20 in real space is optimized to a three-dimensional density structure 30 in the real space will be described with reference to FIG. 3. For example, the three-dimensional density structure 20 is an estimation target. The information processing apparatus 100 generates a projection image 21 by projecting the three-dimensional density structure 20 in a first projection direction. The information processing apparatus 100 generates a frequency image 21a by executing two-dimensional Fourier transform on the projection image 21.

In contrast, the information processing apparatus 100 generates a three-dimensional density structure 30a in Fourier space by executing three-dimensional Fourier transform on the actual three-dimensional density structure 30. The information processing apparatus 100 generates a frequency image 31a by projecting the three-dimensional density structure 30a in the first projection direction.

The information processing apparatus 100 calculates an estimation error by calculating the differences between the frequency image 21a and the frequency image 31a at frequency coordinates and cumulating values obtained by multiplying the calculated differences by the correction filter coefficient $F(u', v')$. The information processing apparatus 100 adjusts the values of the frequency coordinates of the frequency image 21a so as to reduce the estimation error.

Subsequently, the information processing apparatus 100 generates a projection image 22 by projecting the three-dimensional density structure 20 in a second projection direction different from the first projection direction. The information processing apparatus 100 generates a frequency image 22a by executing two-dimensional Fourier transform on the projection image 22.

The information processing apparatus 100 generates a frequency image 32a by projecting the three-dimensional density structure 30a in the second projection direction.

The information processing apparatus 100 calculates an estimation error by calculating the differences between frequency coordinates of the frequency image 22a and those of the frequency image 32a and cumulating values obtained by multiplying the calculated differences by the correction filter coefficient $F(u', v')$. The information processing apparatus 100 adjusts the values of the frequency coordinates of the frequency image 22a so as to reduce the estimation error.

Similarly, the information processing apparatus 100 obtains an adjusted frequency image by repeatedly executing the above-described processing on a frequency image, which has been obtained by performing Fourier transform on a projection image obtained by projecting the three-dimensional density structure 20 in another projection direction. The information processing apparatus 100 acquires adjusted projection images by performing inverse Fourier transform on adjusted frequency images, and generates a three-dimensional density structure 40 in the real space based on the projection images. This enables the information processing apparatus 100 to optimize the three-dimensional density structure 20 to the three-dimensional density structure 40. The control unit 150 of the information processing apparatus 100 may execute the processing described with reference to FIG. 3.

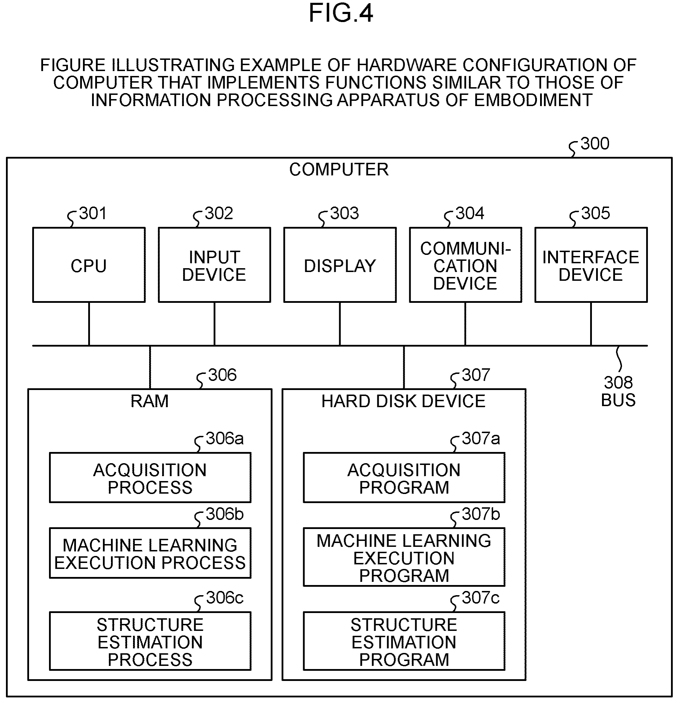

Next, an example of a hardware configuration of a computer that implements functions similar to those of the information processing apparatus 100 described above will be described. FIG. 4 illustrates the example of a hardware configuration of a computer that implements functions similar to those of the information processing apparatus of the embodiment.

As illustrated in FIG. 4, a computer 300 includes a CPU 301, an input device 302, and a display 303. The CPU 301 executes various kinds of arithmetic processing. The input device 302 receives data input from the user. Furthermore, the computer 300 includes a communication device 304 and an interface device 305. The communication device 304 exchanges data with an external device or the like via a wired or wireless network. Furthermore, the computer 300 includes a RAM 306 and a hard disk device 307. The RAM 306 temporarily stores various types of information. Furthermore, devices 301 to 307 are connected to a bus 308.

The hard disk device 307 includes an acquisition program 307a, a machine learning execution program 307b, and a structure estimation program 307c. Furthermore, the CPU 301 reads the programs 307a to 307c, and develops the programs in the RAM 306.

The acquisition program 307a functions as an acquisition process 306a. The machine learning execution program 307b functions as a machine learning execution process 306b. The structure estimation program 307c functions as a structure estimation process 306c.

Processing of the acquisition process 306a corresponds to the processing of the acquisition unit 151. Processing of the machine learning execution process 306b corresponds to the processing of the machine learning execution unit 152. Processing of the structure estimation process 306c corresponds to the processing of the structure estimation unit 153.

Note that the programs 307a to 307c does not necessarily need to be stored in the hard disk device 307 from the beginning. For example, the programs are stored in a "portable physical medium", such as a flexible disk (FD), a CD-ROM, a DVD, a magneto-optical disk, and an IC card, to be inserted into the computer 300. Then, the computer 300 may read and execute the programs 307a to 307c.

The following supplementary notes are disclosed in relation to embodiments including the above-described embodiment.

(Supplementary Note 1) A machine learning program that causes a computer to execute a process comprising:

acquiring a second frequency image by inputting output of an encoder that has input a first frequency image to a decoder; and
training the encoder and the decoder based on a loss function in which a weight related to a first frequency is smaller than a weight related to a second frequency higher than the first frequency, the first frequency image, and the second frequency image.

(Supplementary Note 2) The machine learning program according to Supplementary Note 1, in which the loss function is used for calculating an estimation error by cumulating values obtained by multiplying a difference between the first frequency image and the second frequency image at each frequency coordinate by a weight in which a weight related to the first frequency is smaller than a weight related to a second frequency higher than the first frequency, and, in processing of training the encoder and the decoder, the encoder and the decoder are trained based on the estimation error.

(Supplementary Note 3) The machine learning program according to Supplementary Note 1, in which, the acquiring includes, estimating a three-dimensional density structure is estimated by inputting output of the encoder that has input the first frequency image to the decoder, and acquring the second frequency image based on the three-dimensional density structure.

(Supplementary Note 4) The machine learning program according to Supplementary Note 2, in which, the training the encoder and the decoder, when a value based on a certain frequency coordinate of the first frequency image or the second frequency image is larger than a threshold, further includes setting a difference between the first frequency image and the second frequency image at the certain frequency coordinate to 0 is further executed.

(Supplementary Note 5) The machine learning program according to Supplementary Note 2, in which the loss function further includes a Gaussian filter, and, in the processing of training the encoder and the decoder, the encoder and the decoder are trained based on an estimation error calculated based on the loss function further including the Gaussian filter.

(Supplementary Note 6) An optimization program that causes a computer to execute a process comprising:

multiplying a difference between a first frequency image based on a projection image obtained by projecting a first three-dimensional density structure in a certain projection direction and a second frequency image obtained by projecting a second three-dimensional density structure in Fourier space in the certain projection direction by a weight in which a weight related to a first frequency is smaller than a weight related to a second frequency higher than the first frequency; and
adjusting a value of the first frequency image so as to reduce a multiplication result.

(Supplementary Note 7) A machine learning method carried out by a computer, comprising:

acquiring a second frequency image by inputting output of an encoder that has input a first frequency image to a decoder; and
training the encoder and the decoder based on a loss function in which a weight related to a first frequency is smaller than a weight related to a second frequency higher than the first frequency, the first frequency image, and the second frequency image.

(Supplementary Note 8) The machine learning method according to Supplementary Note 7, in which the loss function is used for calculating an estimation error by cumulating values obtained by multiplying a difference between the first frequency image and the second frequency image at each frequency coordinate by a weight in which a weight related to the first frequency is smaller than a weight related to a second frequency higher than the first frequency, and, in processing of training the encoder and the decoder, the encoder and the decoder are trained based on the estimation error.

(Supplementary Note 9) The machine learning method according to Supplementary Note 7, in which, the acquiring includes, estimating a three-dimensional density structure is estimated by inputting output of the encoder that has input the first frequency image to the decoder, and acquring the second frequency image based on the three-dimensional density structure.

(Supplementary Note 10) The machine learning method according to Supplementary Note 8, in which, the training, when a value based on a certain frequency coordinate of the first frequency image or the second frequency image is larger than a threshold, further includes setting a difference between the first frequency image and the second frequency image at the certain frequency coordinate to 0.

(Supplementary Note 11) The machine learning method according to Supplementary Note 8, in which the loss function further includes a Gaussian filter, and, in the processing of training the encoder and the decoder, the encoder and the decoder are trained based on an estimation error calculated based on the loss function further including the Gaussian filter.

(Supplementary Note 12) An optimization method carried out by a computer, comprising:

multiplying a difference between a first frequency image based on a projection image obtained by projecting a first three-dimensional density structure in a certain projection direction and a second frequency image obtained by projecting a second three-dimensional density structure in Fourier space in the certain projection direction by a weight in which a weight related to a first frequency is smaller than a weight related to a second frequency higher than the first frequency; and

adjusting a value of the first frequency image so as to reduce a multiplication result.

(Supplementary Note 13) An information processing apparatus including a control unit configured to to execute a process comprising:

acquiring a second frequency image by inputting output of an encoder that has input a first frequency image to a decoder; and

training the encoder and the decoder based on a loss function in which a weight related to a first frequency is smaller than a weight related to a second frequency higher than the first frequency, the first frequency image, and the second frequency image.

(Supplementary Note 14) The information processing apparatus according to Supplementary Note 13, in which the loss function is used for calculating an estimation error by cumulating values obtained by multiplying a difference between the first frequency image and the second frequency image at each frequency coordinate by a weight in which a weight related to the first frequency is smaller than a weight related to a second frequency higher than the first frequency, and, in processing of training the encoder and the decoder, the encoder and the decoder are trained based on the estimation error.

(Supplementary Note 15) The information processing apparatus according to Supplementary Note 13, in which, the acquiring further includes, estimating a three-dimensional density structure is estimated by inputting output of the encoder that has input the first frequency image to the decoder, and acquiring the second frequency image based on the three-dimensional density structure.

(Supplementary Note 16) The information processing apparatus according to Supplementary Note 14, in which, the training, when a value based on a certain frequency coordinate of the first frequency image or the second frequency image is larger than a threshold, further includes setting a difference between the first frequency image and the second frequency image at the certain frequency coordinate to 0.

(Supplementary Note 17) The information processing apparatus according to Supplementary Note 14, in which the loss function further includes a Gaussian filter, and, in the processing of training the encoder and the decoder, the encoder and the decoder are trained based on an estimation error calculated based on the loss function further including the Gaussian filter.

(Supplementary Note 18) An information processing apparatus including a control unit configured to to execute a process comprising:

multiplying a difference between a first frequency image based on a projection image obtained by projecting a first three-dimensional density structure in a certain projection direction and a second frequency image obtained by projecting a second three-dimensional density structure in Fourier space in the certain projection direction by a weight in which a weight related to a first frequency is smaller than a weight related to a second frequency higher than the first frequency; and

adjusting a value of the first frequency image so as to reduce a multiplication result.

Reference Signs List

| 100 | INFORMATION PROCESSING APPARATUS |
| --- | --- |

| 110 | COMMUNICATION UNIT |
| --- | --- |
| 120 | INPUT UNIT |
| 130 | DISPLAY UNIT |
| 140 | STORAGE UNIT |
| 141 | PROJECTION IMAGE DATA TABLE |
| 142 | AUTO-ENCODER DATA |
| 150 | CONTROL UNIT |
| 151 | ACQUISITION UNIT |
| 152 | MACHINE LEARNING EXECUTION UNIT |
| 153 | STRUCTURE ESTIMATION UNIT |

**Claims**

1. A machine learning program that causes a computer to execute a process comprising:

   acquiring a second frequency image by inputting output of an encoder that has input a first frequency image to a decoder; and
   training the encoder and the decoder based on a loss function in which a weight related to a first frequency is smaller than a weight related to a second frequency higher than the first frequency, the first frequency image, and the second frequency image.

2. The machine learning program according to claim 1, wherein the loss function is used for calculating an estimation error by cumulating values obtained by multiplying a difference between the first frequency image and the second frequency image at each frequency coordinate by a weight in which a weight related to the first frequency is smaller than a weight related to a second frequency higher than the first frequency, and, in processing of training the encoder and the decoder, the encoder and the decoder are trained based on the estimation error.

3. The machine learning program according to claim 1, wherein the acquiring includes

   estimating a three-dimensional density structure by inputting output of the encoder that has input the first frequency image to the decoder, and
   acquiring the second frequency image based on the three-dimensional density structure.

4. The machine learning program according to claim 2, wherein the training the encoder and the decoder, when a value based on a certain frequency coordinate of the first frequency image or the second frequency image is larger than a threshold, further inlcudes setting a difference between the first frequency image and the second frequency image at the certain frequency coordinate to 0.

5. The machine learning program according to claim 2, wherein the loss function further includes a Gaussian filter, and, in the processing of training the encoder and the decoder, the encoder and the decoder are trained based on an estimation error calculated based on the loss function further including the Gaussian filter.

6. An optimization program that causes a computer to execute a process comprising:

   multiplying a difference between a first frequency image based on a projection image obtained by projecting a first three-dimensional density structure in a certain projection direction and a second frequency image obtained by projecting a second three-dimensional density structure in Fourier space in the certain projection direction by a weight in which a weight related to a first frequency is smaller than a weight related to a second frequency higher than the first frequency; and
   adjusting a value of the first frequency image so as to reduce a multiplication result.

7. A machine learning method carried out by a computer, comprising:

   acquiring a second frequency image by inputting output of an encoder that has input a first frequency image to a decoder; and
   training the encoder and the decoder based on a loss function in which a weight related to a first frequency is smaller than a weight related to a second frequency higher than the first frequency, the first frequency image, and the second frequency image.

8. The machine learning method according to claim 7, wherein the loss function is used for calculating an estimation error by cumulating values obtained by multiplying a difference between the first frequency image and the second frequency image at each frequency coordinate by a weight in which a weight related to the first frequency is smaller than a weight related to a second frequency higher than the first frequency, and, in processing of training the encoder and the decoder, the encoder and the decoder are trained based on the estimation error.

9. The machine learning method according to claim 7, wherein the acquiring includes

estimating a three-dimensional density structure is estimated by inputting output of the encoder that has input the first frequency image to the decoder, and
acquiring the second frequency image based on the three-dimensional density structure.

10. The machine learning method according to claim 8, wherein the training, when a value based on a certain frequency coordinate of the first frequency image or the second frequency image is larger than a threshold, further inlcudes setting a difference between the first frequency image and the second frequency image at the certain frequency coordinate to 0.

11. The machine learning method according to claim 8, wherein the loss function further includes a Gaussian filter, and, in the processing of training the encoder and the decoder, the encoder and the decoder are trained based on an estimation error calculated based on the loss function further including the Gaussian filter.

12. An optimization method carried out by a computer, comprising:

multiplying a difference between a first frequency image based on a projection image obtained by projecting a first three-dimensional density structure in a certain projection direction and a second frequency image obtained by projecting a second three-dimensional density structure in Fourier space in the certain projection direction by a weight in which a weight related to a first frequency is smaller than a weight related to a second frequency higher than the first frequency; and
adjusting a value of the first frequency image so as to reduce a multiplication result.

13. An information processing apparatus including a control unit configured to to execute a process comprising:

acquiring a second frequency image by inputting output of an encoder that has input a first frequency image to a decoder; and
training the encoder and the decoder based on a loss function in which a weight related to a first frequency is smaller than a weight related to a second frequency higher than the first frequency, the first frequency image, and the second frequency image.

14. The information processing apparatus according to claim 13, wherein the loss function is used for calculating an estimation error by cumulating values obtained by multiplying a difference between the first frequency image and the second frequency image at each frequency coordinate by a weight in which a weight related to the first frequency is smaller than a weight related to a second frequency higher than the first frequency, and, in processing of training the encoder and the decoder, the encoder and the decoder are trained based on the estimation error.

15. The information processing apparatus according to claim 13, wherein the acquiring further includes

estimating three-dimensional density structure is estimated by inputting output of the encoder that has input the first frequency image to the decoder, and
acquiring the second frequency image based on the three-dimensional density structure.

16. The information processing apparatus according to claim 14, wherein the training, when a value based on a certain frequency coordinate of the first frequency image or the second frequency image is larger than a threshold, further includes setting a difference between the first frequency image and the second frequency image at the certain frequency coordinate to 0.

**17.** The information processing apparatus according to claim 14, wherein the loss function further includes a Gaussian filter, and, in the processing of training the encoder and the decoder, the encoder and the decoder are trained based on an estimation error calculated based on the loss function further including the Gaussian filter.

**18.** An information processing apparatus including a control unit configured to to execute a process comprising:

multiplying a difference between a first frequency image based on a projection image obtained by projecting a first three-dimensional density structure in a certain projection direction and a second frequency image obtained by projecting a second three-dimensional density structure in Fourier space in the certain projection direction by a weight in which a weight related to a first frequency is smaller than a weight related to a second frequency higher than the first frequency; and
adjusting a value of the first frequency image so as to reduce a multiplication result.

# FIG.1

FUNCTIONAL BLOCK DIAGRAM ILLUSTRATING CONFIGURATION OF
INFORMATION PROCESSING APPARATUS ACCORDING TO EMBODIMENT

# FIG.2

FLOWCHART ILLUSTRATING PROCESSING PROCEDURE OF
INFORMATION PROCESSING APPARATUS ACCORDING TO EMBODIMENT

START

ACQUIRE PROJECTION IMAGE IN CERTAIN PROJECTION DIRECTIONS $\theta$ AND $\phi$ FROM PROJECTION IMAGE DATA TABLE — S101

GENERATE FIRST FREQUENCY IMAGE BY PERFORMING FOURIER TRANSFORM ON PROJECTION IMAGE — S102

INPUT FIRST FREQUENCY IMAGE TO ENCODER, AND ESTIMATE THREE-DIMENSIONAL DENSITY STRUCTURE IN FOURIER SPACE FROM DECODER — S103

ACQUIRE SECOND FREQUENCY IMAGE BY PROJECTING THREE-DIMENSIONAL DENSITY STRUCTURE IN PROJECTION DIRECTIONS $\theta$ AND $\phi$ — S104

SET DIFFERENCE BETWEEN FIRST FREQUENCY IMAGE AND SECOND FREQUENCY IMAGE AS $P_{\theta,\phi}(u',v')$ — S105

CALCULATE ESTIMATION ERROR BASED ON EXPRESSION (3) — S106

EXECUTE MACHINE LEARNING OF AUTO-ENCODER TYPE NEURAL NETWORK SO AS TO REDUCE ESTIMATION ERROR — S107

END

# FIG.3

FIGURE ILLUSTRATING EXAMPLE OF OPTIMIZATION OF THREE-DIMENSIONAL DENSITY STRUCTURE

# FIG.4

FIGURE ILLUSTRATING EXAMPLE OF HARDWARE CONFIGURATION OF
COMPUTER THAT IMPLEMENTS FUNCTIONS SIMILAR TO THOSE OF
INFORMATION PROCESSING APPARATUS OF EMBODIMENT

300

COMPUTER

| 301 | 302 | 303 | 304 | 305 |
|---|---|---|---|---|
| CPU | INPUT DEVICE | DISPLAY | COMMUNI-CATION DEVICE | INTERFACE DEVICE |

308
BUS

306
RAM

306a
ACQUISITION PROCESS

306b
MACHINE LEARNING EXECUTION PROCESS

306c
STRUCTURE ESTIMATION PROCESS

307
HARD DISK DEVICE

307a
ACQUISITION PROGRAM

307b
MACHINE LEARNING EXECUTION PROGRAM

307c
STRUCTURE ESTIMATION PROGRAM

16

# FIG.5

FIGURE ILLUSTRATING CONVENTIONAL TECHNIQUE

# FIG.6

## FIGURE (1) ILLUSTRATING PROBLEM OF CONVENTIONAL TECHNIQUE

# FIG.7

## FIGURE (2) ILLUSTRATING PROBLEM OF CONVENTIONAL TECHNIQUE

# FIG.8

FIGURE (3) ILLUSTRATING PROBLEM OF CONVENTIONAL TECHNIQUE

ESTIMATED THREE-DIMENSIONAL
DENSITY STRUCTURE

ACTUAL THREE-DIMENSIONAL
DENSITY STRUCTURE

IDEAL

CONVENTIONAL TECHNIQUE

## INTERNATIONAL SEARCH REPORT

| International application No. |
|---|
| **PCT/JP2023/045641** |

### A. CLASSIFICATION OF SUBJECT MATTER

*G06T 7/00*(2017.01)i; *G06N 3/0455*(2023.01)i
FI:  G06T7/00 350C; G06N3/0455

According to International Patent Classification (IPC) or to both national classification and IPC

### B. FIELDS SEARCHED

Minimum documentation searched (classification system followed by classification symbols)

G06N 3/00 - 3/12, G06N 7/08 - 99/00, G06T 1/00, G06T 3/00 - 3/60, G06T 5/00 - 5/50, G06T 7/00 - 7/90, G06V10/00 - 20/90, G06V30/418, G06V40/16, G06V40/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | 市村直幸, 空間周波数損失を用いた畳み込みニューラルネットワークの学習, 電子情報通信学会技術研究報告, vol. 120, no. 409 [online], 25 February 2021, pp. 25-30, (ICHIMURA, Naoyuki. Learning Convolutional Neural Networks with Spatial Frequency Loss. IEICE Technical Report.) section "Summary", fig. 2 | 1-18 |
| A | CHUXI, Yang et al. Deep Image Compression in the Wavelet Transform Domain Based on High Frequency Sub-Band Prediction. IEEE Access. 2019, vol. 7, pp. 52484-52497 section "Abstract", fig. 1 | 1-18 |
| A | 村田 和義, 電子顕微鏡によるバイオイメージング, 画像ラボ, 10 April 2014, vol. 25, no. 4, pp. 6-13, (MURATA, Kazuyoshi. Electron Microscopy for Bioimaging. Image Laboratory.) sections "Steric restructuring of bio-samples using electron microscopy", "Single-particle analysis" | 1-18 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ELLEN D. ZHONG et al.** RECONSTRUCTING CONTINUOUS DISTRIBUTIONS OF 3D PROTEIN STRUCTURE FROM CRYO-EM IMAGES. *arXiv: 1909.05215v3 [q-bio.QM*, 15 February 2020